# EUROPÄISCHE PATENTSCHRIFT

(11) **EP 3 801 358 B1**
(45) Veröffentlichungstag und Bekanntmachung des Hinweises auf die Patenterteilung: **20.09.2023**
(21) Anmeldenummer: 19730263.1
(22) Anmeldetag: 21.05.2019
(51) Int. Cl.: A61C 5/46

(54) **ZAHNMEDIZINISCHES INSTRUMENT ZUM ENTFERNEN FRAKTURIERTER WURZELKANALINSTRUMENTE**
DENTAL INSTRUMENT FOR REMOVAL OF FRACTURED ROOT CANAL INSTRUMENTS
INSTRUMENT DENTAIRE PERMETTANT DE RETIRER DES INSTRUMENTS D'ENDODONTIE FRACTURÉS

(30) Priorität: 10.06.2018 DE 102018004714; 04.09.2018 DE 202018105044 U
(43) Veröffentlichungstag der Anmeldung: 14.04.2021
(73) Patentinhaber: Köhrer, Dennis Manuel, 41466 Neuss NRW (DE)
(72) Erfinder: Köhrer, Dennis Manuel, 41466 Neuss NRW (DE)
(74) Vertreter: Paul & Albrecht Patentanwälte PartG mbB
(86) Internationale Anmeldenummer: PCT/EP2019/063073
(87) Internationale Veröffentlichungsnummer: WO 2019/238364

(56) Entgegenhaltungen:
- CN-A- 106 580 487
- JP-A- 2004 024 621
- US-B2- 7 080 981

## Beschreibung

Die Erfindung betrifft ein zahnmedizinisches Instrument zum Entfernen frakturierter Wurzelkanalinstrumente aus Wurzelkanälen oder dem umliegenden Gewebe der Zähne (Knochen und Weichgewebe).

Die Fraktur von Instrumenten für die Aufbereitung von Wurzelkanälen stellt eine nicht seltene Komplikation in der täglichen Praxis des Zahnarztes dar.

Ein frakturiertes Instrument verblockt in der Regel den zu behandelnden Wurzelkanal und verhindert somit eine weitere Aufbereitung, Reinigung und dichte Füllung, was als Risiko für den Erfolg der Behandlung angesehen werden muss. In nicht seltenen Fällen bedeutet das die Extraktion des Zahnes. Die Entfernung dieser frakturierten Instrumente stellt in der Zahnmedizin eine große Herausforderung an den Behandler dar und ist in den meisten Fällen sehr schwierig. Die verfügbaren Instrumente und Systeme für die Entfernung frakturierter Instrumente ermöglichen oft nur die Entfernung von Instrumenten, die im koronalen Drittel des Wurzelkanals abgebrochen sind.

Für die meisten Techniken muss ein relativ großer Zugang zum Bergen des Instrumentes geschaffen werden, was eine hohe Gefahr der Wurzelperforation mit sich bringt und den Zahn grundsätzlich sehr schwächt.

Die Schlingentechnik mittels eines sehr dünnen Drahtes welcher an beiden Enden durch eine stumpfe Kanüle geführt wird und somit an der Vorderseite der Kanüle eine Schlinge bildet mit der das frakturierte Instrumentenstück gefasst werden kann, wurde bereits in den 1980iger Jahren in der Literatur und einem US-Patent beschrieben (Roig-Greene JL. The retrieval of foreign objects from root canals: a simple aid. J Endod 1983; 9:394-397, US 4,247,285 A). Diese Technik ermöglicht es, das frakturierte Instrument selbst tief im Wurzelkanal zu greifen und zu entfernen. Die Drahtenden am oberen Ende der Kanüle werden hier mit einer Arterienklemme oder Zange gefasst und der Draht durch Aufdrehen gespannt, sodass sich die Schlaufe am anderen Ende der Kanüle schließt. Diese Technik erweist sich in der praktischen Durchführung als sehr schwierig und techniksensibel, da die Handhabung sehr unpraktisch ist. Die Kanüle kann sehr schlecht (nur mit den Fingerspitzen) gehalten und somit die Schlinge nur schwierig um das zu entfernende Instrument platziert werden. Durch das Spannen des Drahtes mithilfe der Zange kommt es zu Bewegungen, die eine genaue Schlingenplatzierung während des Zuziehens der Schlinge erschweren.

Aus der DE 10 2013 009 483 A1 ist ein Instrument für die Entfernung von frakturierten Instrumenten bekannt, welches ebenfalls auf der Schlingentechnik beruht. Hier wird durch eine Federspannvorrichtung die Schlaufe mittels eines Auslösers schlagartig gespannt. Nachteil dieser Technik ist die geringe Kontrolle über die Schlaufenspannung und die durch die Elastizität der Feder bedingte Schlusskraft der Schlaufe. Bei stärkerem Zug gibt die Feder nach, die Schlaufe öffnet sich leicht und das Instrument rutscht aus der Schlinge. Hiermit können nur lose Instrumente entfernt werden. Ein weiteres Instrument welches auf der Schlingentechnik beruht ist unter dem Namen "Fragremover" bekannt (Hergt, Ansgar ; Petschler, Michael 2018 " Fragmententfernung mit dem Fragremover" Endodontie 27 2018 Nr.1 02.03.2018 Quinessenz Verlag). Dieses Instrument ermöglicht zwar ein stufenloses Spannen der Schlaufe mithilfe einer Überwurfmutter, welche beim Drehen den Draht spannt, ist aber durch seine Größe und Form (Pistolenform) nachteilig in der Handhabung. Das Instrument ist aus Gewichtsgründen aus Kunststoff gefertigt. Daher ist die Mechanik recht schwergängig und muss unergonomisch mit den Fingern bedient werden, was wieder zu relativ starken Verwackelungsbewegungen führen kann und somit das Platzieren der Schlinge erschwert. Die Größe des Instruments ist in dem sehr engen Arbeitsfeld der Mundhöhle hinderlich und kann die Sicht durch das Mikroskop verhindern. Ein weiteres Instrument basierend auf der Schlingentechnik ist der "Loop Device" aus dem Terauchi File Retrieval Kit (US 7,080,981 B2). Dieses Instrument ist zwar handlicher, hier muss aber der Behandler mit dem Zeigefinger einen Schiebeknopf bedienen um die Schlinge zu schließen. Auch hier wird durch unerwünschte Bewegung die Platzierung erschwert und die Kraft des Schlingenschlusses ist nicht sehr sicher. Größter Nachteil des Instruments ist der nur einmalige Gebrauch. Die hohen Anwendungskosten von 135 USD pro Instrument und das Risiko das evtl. mehrere Schlingen bei einer Behandlung reißen und somit die Behandlungskosten kaum vorhersagbar sind, führt zu einem sehr seltenen Einsatz des Instruments in der Praxis.

Weitere Instrumente sind beispielsweise aus JP 2004 024621 A und CN 106 580 487 A bekannt.

Aufgabe der Erfindung ist es, mit einem praktikablen, erfindungsgemäßen Instrument die Schlingentechnik in einer in der alltäglichen Praxis anwendbaren, sicheren und ökonomisch durchführbaren Weise zu etablieren und somit dem Zahnarzt ein Werkzeug an die Hand zu geben, welches ihm die sichere Entfernung frakturierter Instrumente aus Wurzelkanälen ermöglicht, um den Erhalt von sonst nicht erhaltungsfähigen Zähnen zu ermöglichen. Zur Lösung dieser Aufgabe schlägt die Erfindung ein zahnmedizinisches Instrument zum Entfernern frakturierter Wurzelkanalinstrumente aus Wurzelkanälen vor mit einem zumindest an seinem vorderen Endabschnitt hohl ausgebildeten Instrumentengehäuse, einem Schlitten, der an dem Instrumentengehäuse drehfest gehalten, aber in einer Axialrichtung translatorisch bewegbar geführt ist, einer Gewindestange, die an dem Schlitten befestigt ist und mit einem Gegengewinde des Instrumentengehäuses oder eines an dem Instrumentengehäuse gehaltenen Gegenelements in Eingriff steht, so dass eine relative Drehbewegung zwischen der Gewindestange einerseits und dem Instrumentengehäuse und/oder dem Gegenelement andererseits zu einer axialen Verstellung des Schlittens führt, und Befestigungsmitteln, um einen Draht an dem Schlitten zu befestigen, wobei das hohle Instrumentengehäuse zu seiner Vorderseite offen ausgebildet ist, so dass ein Draht durch die offene Vorderseite in das Instrumentengehäuse und in diesem zu den Befestigungsmitteln geführt werden kann.

Der Erfindung liegt die Überlegung zugrunde, nach wie vor die Schlingentechnik für die Feilentfernung einzusetzen, da diese immer noch die vielversprechendste Lösung darstellt, jedoch das Spannen des Drahtes und somit den Schluss der Schlinge über einen Schlitten vorzunehmen, welcher durch eine relative Drehbewegung zwischen der Gewindestange einerseits und dem Instrumentengehäuse und/oder einem daran gehaltenen Gegenelement andererseits präzise und stufenlos axial verstellt wird. Die relative Drehbewegung muss dabei nicht vom Arzt selber vorgenommen werden, sondern kann nach dem Platzieren der Schlinge um das zu entfernende frakturierte Instrument von der Assistenz gedreht werden, um ein Verwackeln beim Schließen der Schlinge zu vermeiden.

Zur Fixierung des Drahtes an dem Schlitten sind Befestigungsmittel vorgesehen, die von der Außenseite des Instruments her bedienbar sind. Gemäß einer bevorzugten Ausführungsform weist das Instrumentengehäuse seitliche eine Fensterung auf, so dass ein in das Instrumentengehäuse durch dessen offene Vorderseite eingeführter Draht durch die Fensterung wieder nach außen geführt und mit den Befestigungsmitteln in Eingriff gebracht werden kann.

In weiterer Ausgestaltung der Erfindung kann das Instrumentengehäuse rohrförmig ausgebildet sein, wobei dann der Schlitten in dem Instrumentengehäuse drehfest gehalten, aber in axialer Richtung translatorisch bewegbar geführt ist. In diesem Fall sind die Befestigungsmittel bevorzugt durch die Fensterung des Instrumentengehäuses mit dem Schlitten verbunden und ragen aus dem Instrumentengehäuse, so dass sie von der Außenseite des Instrumentengehäuses her betätigbar sind.

Bei einer bevorzugten Ausführungsform der Erfindung ist vorgehen, dass die Befestigungsmittel einen Gewindebolzen aufweisen, welcher durch die Fensterung in den Schlitten eingebracht und in diesem fixiert, insbesondere festgeschraubt ist, und eine Feststellmutter umfassen, welche auf das aus dem Schlitten ragende Ende des Gewindebolzens geschraubt ist, wobei die Anordnung so getroffen ist, dass ein Draht zwischen der Feststellmutter und dem Schlitten festgeklemmt werden kann, um diesen am Schlitten zu fixieren.

Dabei kann in dem Gewindebolzen eine axiale Durchgangsbohrung ausgebildet sein oder kann in der Umfangsfläche des Gewindebolzens eine ringförmige Umfangsnut ausgebildet sein. Bei dieser Ausgestaltung kann der in das Instrumentengehäuse durch dessen offene Vorderseite eingeführte Draht über die Durchgangsbohrung oder die Umfangsnut bzw. eine korrespondierende Vertiefung exakt an dem Gewindebolzen positioniert und ggf. um diesen gewickelt werden, bevor der Draht durch Festdrehen der Feststellmutter festgeklemmt wird.

Gemäß einer bevorzugten Ausführungsform der Erfindung ist vorgesehen, dass das vordere Ende des Instrumentengehäuses außenseitig als Instrumentenspitze derart ausgebildet ist, dass ein Ansatz in Form einer Kanüle auf die Instrumentenspitze gesteckt und daran klemmend fixiert werden kann, wozu die Instrumentenspitze außenseitig eine entsprechende Konizität aufweist, wobei in der Instrumentenspitze eine zur Vorderseite des Instrumentengehäuses offene Bohrung zur Durchführung eines Drahtes ausgebildet ist.

Insbesondere kann die Instrumentenspitze mit einem radial nach außen vorstehenden, axial verlaufenden Steg versehen sein, so dass eine mit einer korrespondierenden Nut versehene Kanüle an der Instrumentenspitze in Umfangsrichtung positionierbar ist.

Dieser Ausführungsform liegt die Überlegung zugrunde, einen Aufsatz für das Instrument zur Verfügung zu stellen, welcher lediglich auf die Instrumentenspitze aufgeschoben zu werden braucht, so dass ein aufwendiges Hantieren, um den Draht unter Bildung einer Schlinge in das Instrumentengehäuse einzubringen, entfallen kann. Ein solcher Aufsatz umfasst eine Kanüle, die eine hohle Nadel oder einen hohlen Schaft und eine daran endseitig vorgesehene, innenseitig eine Konizität aufweisende Befestigungshülse zur Anbringung an einer Spritze oder Befestigungskonus des Instruments besitzt, wobei in die Hohlnadel die beiden Enden eines Drahts eingebracht sind derart, dass an dem vorderen Ende der Hohlnadel eine Schlinge gebildet wird und die beiden Drahtenden aus dem rückseitigen Ende der Kanüle ragen. Dabei können die beiden Drahtenden an einem nadel- oder stiftartigen Führungsstab fixiert sein. Bei diesem Aufsatz ist die Schlinge an der Kanüle bereits vormontiert, so dass die Kanüle lediglich auf die Instrumentenspitze gesteckt werden muss, nachdem die Drahtenden durch die Bohrung in der Instrumentenspitze in das Instrumentengehäuse geführt wurden. Wenn die beiden Drahtenden an einem Führungsstift befestigt sind, kann das Einfädeln besonders einfach erfolgen.

Der Stellmechanismus zur Umsetzung einer Drehbewegung in eine Axialbewegung des Schlittens kann unterschiedlich ausgestaltet sein. Gemäß einer Ausführungsform ist vorgesehen, dass die Gewindestange drehfest mit dem Schlitten verbunden ist und axial in das Instrumentengehäuse von dessen Rückseite her eingreift, und dass auf ein Außengewinde der Gewindestange ein Stellrad geschraubt ist, das an dem Instrumentengehäuse axial fest gehalten ist, so dass eine Drehung des Stellrades in eine axiale Bewegung der Gewindestange und damit des Schlitten umgesetzt wird. Dabei kann an der Rückseite des Instrumentengehäuses eine Halterung angebracht, insbesondere festgeschraubt sein, die von der Gewindestange axial durchgriffen wird und in welcher das Stellrad axialfest positioniert ist. Gemäß einer besonders bevorzugten Ausführungsform ist dabei das Stellrad an der Halterung durch ein Gleit- oder Wälzlager axial abgestützt, so dass es besonders leicht gedreht werden kann.

Gemäß einer alternativen Ausführungsform kann vorgesehen sein, dass die Gewindestange an dem Schlitten axialfest, aber um ihre Achse drehbar gehalten ist, und insbesondere axial in das Instrumentengehäuse von dessen Rückseite her eingreift, und dass ein Außengewinde der Gewindestange mit einem korrespondierenden Gegengewinde des Instrumentengehäuses oder eines daran fixierten Bauteils in Eingriff steht, so dass eine Drehung der Gewindestange in eine axiale translatorische Bewegung des Schlittens umgesetzt wird, wobei insbesondere an dem freien Ende der Gewindestange ein Betätigungsrad vorgesehen ist.

In bevorzugter Weise ist die Gewindestange mit einem Feingewinde einer Steigung von 0,2 - 1,2 mm, insbesondere von 0,4 - 1 mm versehen, so dass eine sehr feine Justierung bzw. Bewegung des Schlittens möglich ist. Desweiteren können Mittel vorgesehen sein, um eine auf den Schlitten wirkende Zugkraft zu erfassen und damit die Auszugkräfte beim Entfernen eines Wurzelkanalinstruments zu messen.

Im Folgenden werden die Details, Vorteile und Funktion eines erfindungsgemäßen Instruments anhand der beiliegenden Zeichnungen erklärt. Die Zahlen beziehen sich auf die in den Figuren bezifferten Bauteilen.

Erfindungswesentlich ist, dass das Spannen des Drahtes 17 und somit der Schluss der Schlinge 16 über einen Schlitten 7 erfolgt, welcher mittels einer Gewindestange 4 über ein Stellrad 2 im Instrumentengehäuse 1 präzise und stufenlos verschoben wird. Das Stellrad 2 muss somit nicht vom Arzt selber bedient werden, sondern kann nach dem Platzieren der Schlinge um das zu entfernende frakturierte Instrument, nach Befehl des Arztes von der Assistenz gedreht werden, um ein Verwackeln beim Schließen der Schlinge zu vermeiden.

Erfindungswesentlich ist außerdem, dass das Instrument 0 welches aus Edelstahl oder Titan gefertigt ist, durch die Verwendung eines feinen Gewindes der Gewindestange 4 mit einem Hub von 0,4 mm -1,0 mm pro Umdrehung, eine sehr feine und stufenlose Justierung erlaubt. Seine handliche Größe und Form erlaubt eine sichere und gezielte Handhabung bei der hochpräzisen und schwierigen Platzierung der Schlinge.

Erfindungswesentlich ist weiterhin die Führung des Schlittens 7 durch den Führungsblock 8 in der Schiene 11 welche eine Rotation des Schlittens verhindert und für eine präzise Führung sorgt.

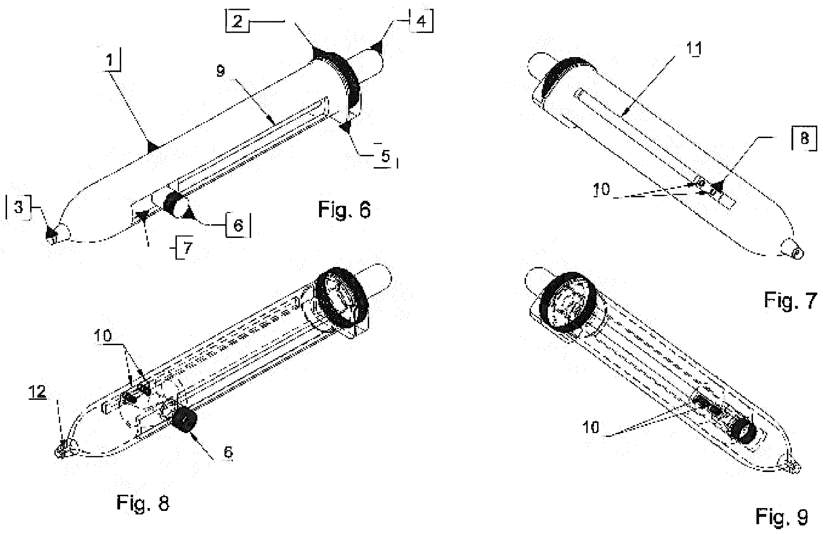

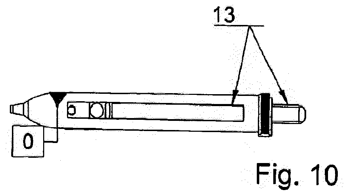

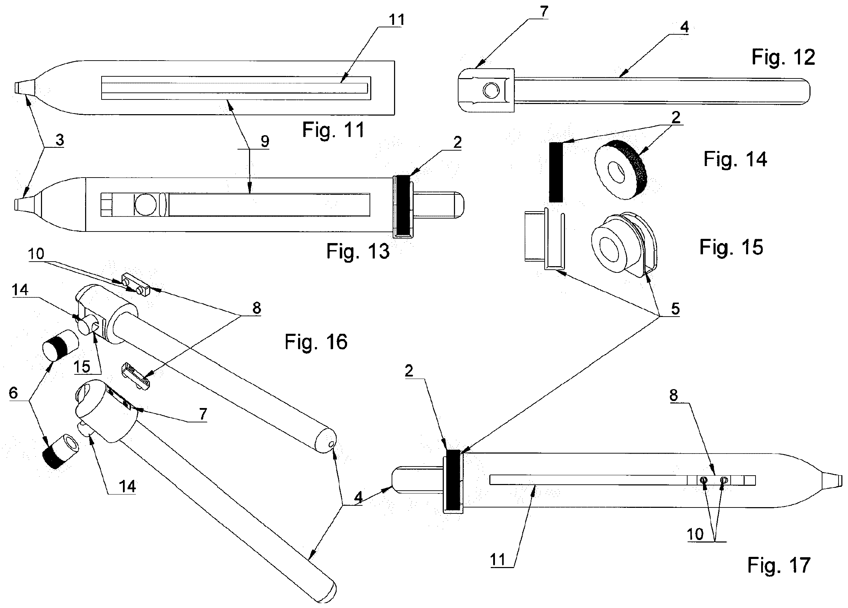

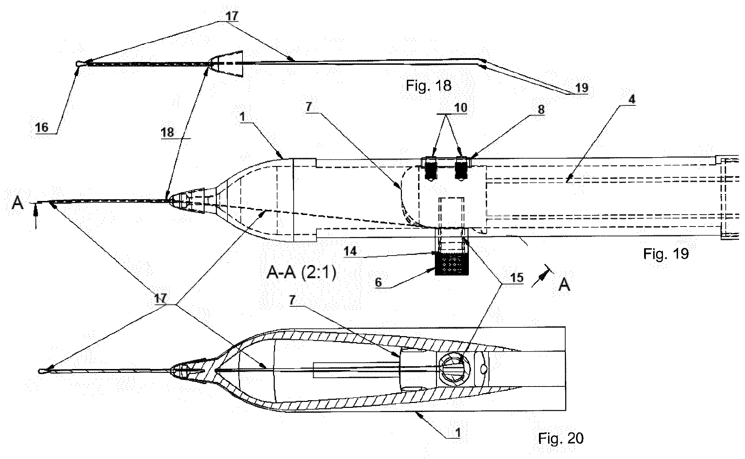

Erfindungswesentlich ist die Möglichkeit verschiedene Ansätze (Fig. 18) zu verwenden. Somit kann zwischen einer Vielzahl verschiedener Ansatzvarianten gewählt werden. Kanülenlänge und Kanülendurchmesser 18 sowie der Drahtdurchmesser und das Drahtmaterial können entsprechend des individuellen Falls ausgewählt werden. Durch die kostengünstigen Ansätze ist die Anwendung hinsichtlich der Materialkosten wirtschaftlicher als bei Einmalinstrumenten. Die Vorbereitung des Instruments ist durch das einfache Tauschen der Ansätze bedingt durch die schnelle Fixierungsmöglichkeit des Drahtes 17 mit Hilfe der Feststellmutter 6 (Fig. 6 u. Fig. 16) wenig Zeitaufwendig.

Aufbau und Funktion eines erfindungsgemäßen Instruments:

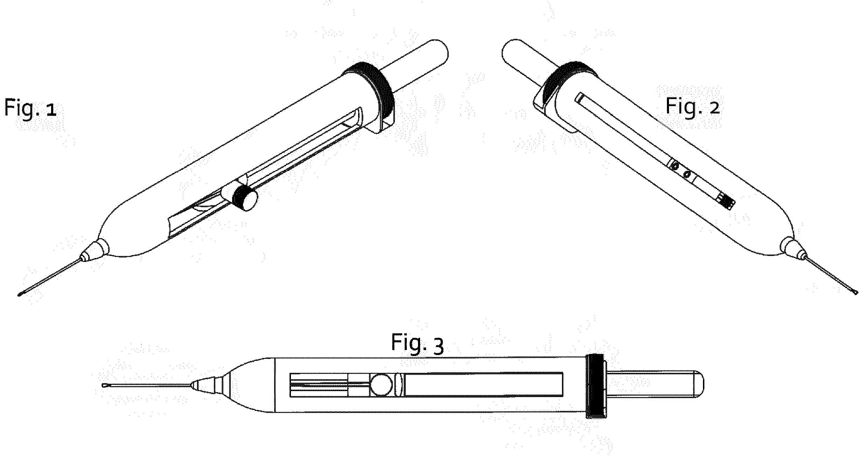

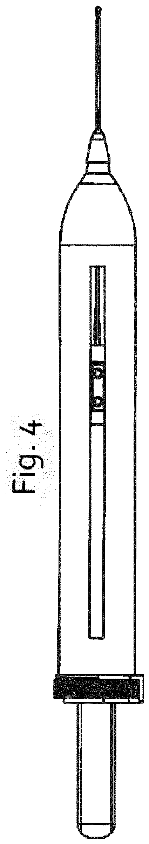

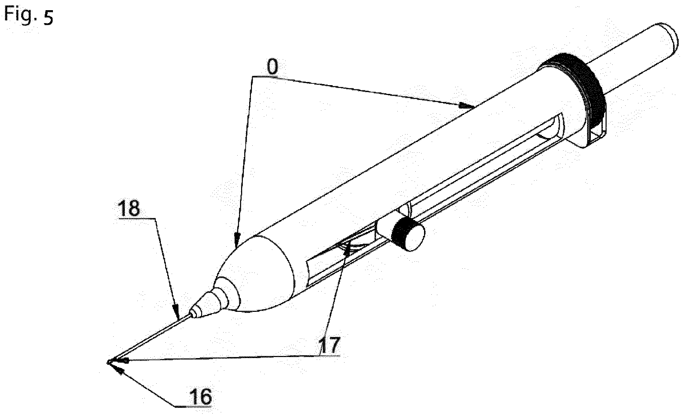

Fig. 1, Fig. 2, Fig. 3 und Fig. 4 zeigen perspektivische Ansichten eines erfindungsgemäßen Instruments mit einem Schlingenansatz (Fig. 18).

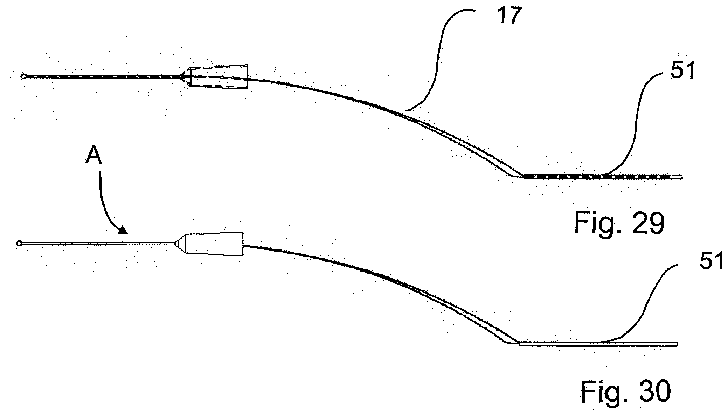

Der Ansatz (Fig. 18) besteht aus einem sehr dünnen Draht 17 mit einem Durchmesser von in der Regel 0.06mm - 0.15mm, vorzugsweise aus Edelstahl, welcher mit beiden Enden 19 durch eine passende Kanüle 18 (0.3mm - 1.0 mm je nach Draht) geführt wird. So entsteht an der Spitze der Kanüle eine sehr kleine Schlinge 16. Die Kanüle 18 kann nach Bedarf gebogen werden, um einen guten Zugang zum Wurzelkanal zu ermöglichen. Die beiden Drahtenden 19 werden beim Aufsetzen des Ansatzes (Fig. 18) auf die Instrumentenspitze 3 (Fig. 6) des Instruments 0 durch die Bohrung 12 (Fig. 8) geführt und dann durch die Bohrung 15 (Fig. 16) der Befestigungsschraube 14 gesteckt. Der Draht 17 wird leicht gespannt, sodass sich die Schlinge etwas zusammenzieht, und dann mit der Feststellmuttermutter 6 fixiert. Nun kann durch Drehen am Stellrad 2 (Fig. 6) die Schlinge auf die gewünschte Größe gebracht und bei Bedarf geschlossen werden. Um das Einfädeln des Drahtes 17 zu erleichtern, können die Drahtenden auch an einem nadel- oder stiftartigen Führungsstab 50 befestigt sein, der einfach durch die Bohrung 12 der Instrumentenspitze 3 sowie die Bohrung 15 der Befestigungsschraube 14 geschoben werden kann (siehe Figuren 29 und 30).

Das Instrument 0 besitzt ein Instrumentengehäuse bzw. einen Gehäusekörper 1, der seitlich jeweils eine längliche Fensterung 9 und 11 besitzt. Die Fensterung 11 dient als Schiene und Rotationsschutz und wird im Weiteren Schiene 11 genannt. Die Fensterung 9 dient der Bedienbarkeit und dem Zugang sowie der Befestigung des Drahtes. Sie wird im Folgenden Fensterung 9 genannt. Im Gehäusekörper 1 läuft ein sehr passgenauer Schlitten 7 welcher mit einer Gewindestange 4 fest verbunden ist. Seitlich am Schlitten befindet sich eine Befestigungsschraube 14 mit einer Bohrung 15 und der passenden Feststellmutter 6 zum Befestigen des Drahtes. Durch die Fensterung 9 kann dieser Teil bedient werden. Der Schlitten 7 ist auf dieser Seite abgeflacht, um eine zu schräge Zugrichtung des Drahtes 17 durch einen zu weit aus der Zugachse versetzten Befestigungspunkt zu vermeiden. Des Weiteren ist die Vorderseite des Schlittens 7 auf dieser Seite besonders abgerundet, um eine Belastung des Drahtes 17 über eine Kante zu vermeiden. Auf der gegenüberliegenden Seite des Schlittens 7 ist ein Führungsblock 8 mit zwei Madenschrauben 10 befestigt, der in der Schiene 11 des Gehäusekörpers 1 geführt wird und somit die Rotation des Schlittens 7 verhindert.

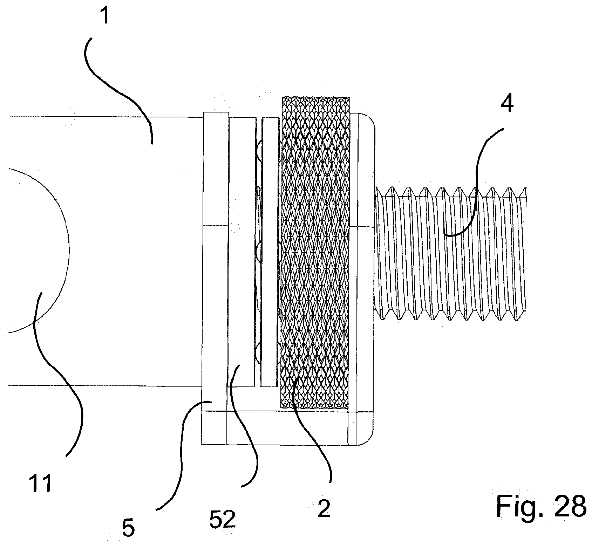

Am hinteren Ende des Gehäusekörpers 1 befindet sich ein Stellrad 2 mit Innengewinde. Dieses Stellrad sitzt in einem Stellradlager 5 und führt die Gewindestange. Das Stellradlager 5 ist von hinten in den Gehäusekörper 1 geschraubt. Durch Drehen am Stellrad 2 kann somit die Gewindestange 4 und damit der Schlitten 7 vor und zurück bewegt werden. So kann mit Hilfe des Stellrades 2 die Schlinge gespannt beziehungsweise gelockert werden. Dabei kann das Stellrad 2 gegenüber dem Stellradlager 5 bzw. der Stellradhalterung über ein Gleitlager oder Wälzlager 52 axial abgestützt werden, wie dies in der Figur 28 angedeutet ist.

In der Praxis wird nach Einspannen des Drahtes 17 die Schlinge 16 mittels des Stallrades 2 vom Arzt auf die gewünschte Größe eingestellt, sodass die Schlinge 16 um das zu entfernende frakturierte Instrument platziert werden kann. Dann wird auf Befehl des Arztes das Stellrad 2 von der Assistenz im Uhrzeigersinn gedreht und somit die Schlinge 16 geschlossen, ohne dass der Arzt die Konzentration von der Platzierung der Schlinge nehmen muss oder durch eigene Handbewegungen ein Verwackeln riskiert.

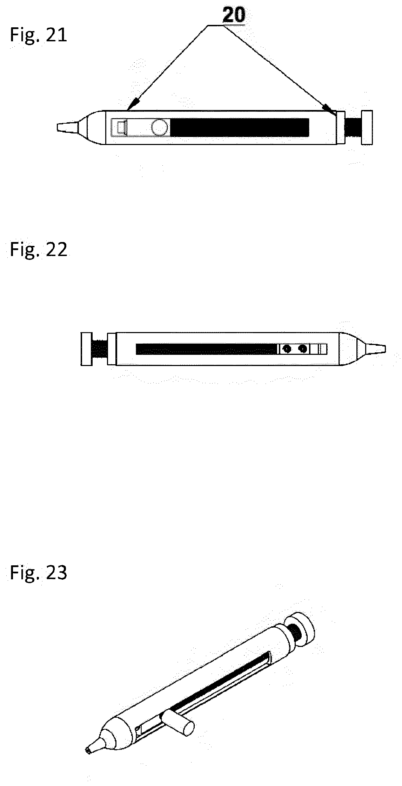

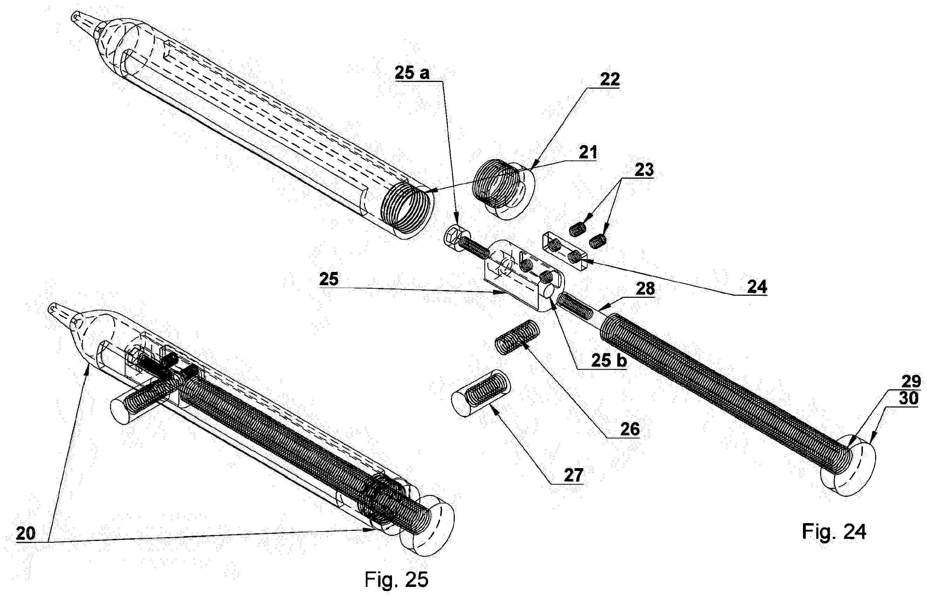

Eine alternative Ausführung eines erfindungsgemäßen Instruments ist in Fig. 21, Fig. 22, Fig. 23, Fig. 24 und Fig. 25 abgebildet. Die Zeichnungen Fig. 21, Fig. 22 und Fig. 23 zeigen das Instrument 20 in verschiedenen perspektivischen Ansichten. In Fig. 24 ist eine Explosionszeichnung des Instruments 20 zu sehen.

Bei dieser Variante des erfindungsgemäßen Instruments 20 besteht zwischen der Gewindestange 29 und dem Schlitten 25 keine starre Verbindung, sondern sie sind über ein Gelenk mit einander verbunden. Die Gewindestange 29 ist über die Welle 28, welche in der Bohrung 25 b gelagert ist, mit rotierendem Freiheitsgrad mit dem durch den Führungsblock 23 rotationsgeschützten Schlitten 25 verbunden. Die Welle 28 wird mit einer Konterschraube 25 a befestigt. Die Gewindestange 29 wird durch eine am hinteren Gehäusekörper 21 befestigte Führungsmutter 22 geführt. Durch Drehen am starr mit der Gewindestange 29 verbundenen Stellrad 30 kann somit der Schlitten 25 vor- und zurückbewegt werden. Die sonstige Funktion und der Aufbau der alternativen Instrumentenvariante 20 entspricht weitestgehend dem erfindungsgemäßen Instrument 0.

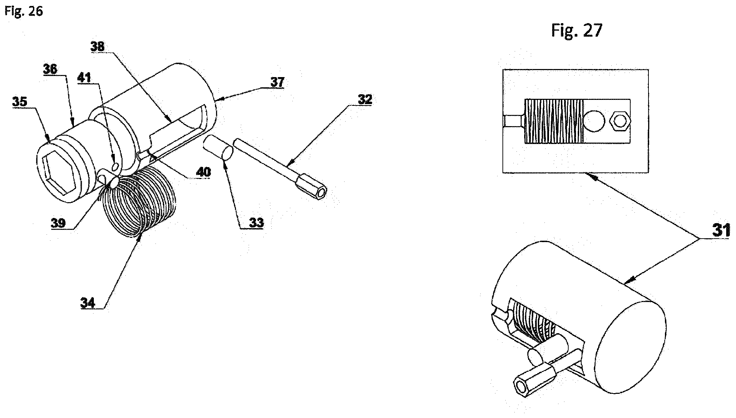

Fig. 26 und Fig. 27 zeigen eine alternative Variante des Schlittens 7 und 25. Dieser Schlitten 31 im Folgenden Zugmessschlitten 31 genannt, bietet die Möglichkeit, die Zugkraft, welche auf den Draht wirkt zu messen. Dies kann gerade am Anfang für den ungeübten Behandler eine gute Orientierungshilfe beim Spannen der Schlinge ermöglichen.

Der Zugmessschlitten 31 besteht aus einem Gehäusekörper 37 in dem ein Kolben 36 geführt wird. Vor dem Kolben 36 sitzt eine Feder 34. Der Gehäusekörper 37 wird von einer Verschlussschraube 35 verschlossen. Am Kolben 36 befindet sich seitlich die Befestigungsschraube 39 sowie die Befestigungsmutter 33 für das Einspannen des Drahtes 17. Direkt dahinter befindet sich eine Gewindebohrung 41 durch den gesamten Kolben 36. Durch diese Gewindebohrung 41 wird eine Feststellschraube 32 geschraubt, mit der der Kolben 36 im Gehäusekörper 37 bei Bedarf verblockt werden kann. Der Gehäusekörper 37 verfügt über eine seitliche Fensterung 38.

Kommt nun durch Zurückziehen des Zugmessschlittens in einem erfindungsgemäßen Instruments 0 oder 20 Zug auf den Draht, so bewegt sich der Kolben 36 im Gehäusekörper 37 entsprechend der Zugkraft nach vorne und spannt die Feder 34. An einer am Gehäusekörper 37 angebrachten Skala kann nun die Zugkraft abgelesen werden.

## Patentansprüche

1. Instrument (0) zum Entfernen frakturierter Wurzelkanalinstrumente mit einem zumindest an seinem vorderen Endabschnitt hohl ausgebildeten Instrumentengehäuse (1), einem Schlitten (7), der an dem Instrumentengehäuse (1) drehfest gehalten, aber in einer Axialrichtung translatorisch bewegbar geführt ist, einer Gewindestange (4), die an dem Schlitten (7) befestigt ist und mit einem Gegengewinde des Instrumentengehäuses (1) oder eines an dem Instrumentengehäuse (1) gehaltenen Gegenelements in Eingriff steht, so dass eine relative Drehbewegung zwischen der Gewindestange (4) einerseits und dem Instrumentengehäuse (1) und/oder dem Gegenelement andererseits zu einer axialen Verstellung des Schlittens (7) führt, und Befestigungsmitteln, um einen Draht (17) an dem Schlitten (7) zu befestigen, wobei das hohle Instrumentengehäuse (1) zu seiner Vorderseite offen ausgebildet ist, so dass ein Draht (17) durch die offene Vorderseite in das Instrumentengehäuse (1) und in diesem zu den Befestigungsmitteln geführt werden kann.

2. Instrument (0) zum Entfernen frakturierter Wurzelkanalinstrumente nach Anspruch 1, **dadurch gekennzeichnet, dass** das Instrumentengehäuse (1) seitlich eine Fensterung (9) aufweist, so dass ein in das Instrumentengehäuse (1) durch dessen offene Vorderseite eingeführter Draht (17) durch die Fensterung (9) wieder nach außen geführt und mit den Befestigungsmitteln in Eingriff gebracht werden kann.

3. Instrument (0) zum Entfernen frakturierter Wurzelkanalinstrumente nach Anspruch 1 oder 2, **dadurch gekennzeichnet, dass** das Instrumentengehäuse (1) rohrförmig ausgebildet ist und der Schlitten (7) in dem Instrumentengehäuse (1) drehfest gehalten, aber in axialer Richtung translatorisch bewegbar geführt ist.

4. Instrument (0) zum Entfernen frakturierter Wurzelkanalinstrumente nach den Ansprüchen 2 und 3, **dadurch gekennzeichnet, dass** die Befestigungsmittel durch die Fensterung (9) des Instrumentengehäuses (1) mit dem Schlitten (7) verbunden sind und aus dem Instrumentengehäuse (1) ragen, so dass sie von der Außenseite des Instrumentengehäuses (1) her betätigbar sind.

5. Instrument (0) zum Entfernen frakturierter Wurzelkanalinstrumente nach Anspruch 4, **dadurch gekennzeichnet, dass** die Befestigungsmittel einen Gewindebolzen aufweisen, welcher durch die Fensterung (9) in den Schlitten (7) eingebracht und in diesem fixiert, insbesondere festgeschraubt ist, und eine Feststellmutter (6) umfasst, welche auf das aus dem Schlitten (7) ragende Ende des Gewindebolzens geschraubt ist, wobei die Anordnung so getroffen ist, dass ein Draht (17) zwischen der Feststellmutter (6) und dem Schlitten (7) festgeklemmt werden kann, um diesen am Schlitten (7) zu fixieren.

6. Instrument (0) zum Entfernen frakturierter Wurzelkanalinstrumente nach Anspruch 5, **dadurch gekennzeichnet, dass** in dem Gewindebolzen (6) eine axiale Durchgangsbohrung (12) ausgebildet ist, durch welche ein Draht (17) geführt werden kann, oder dass in der Umfangsfläche der Feststellschraube (6) eine ringförmige Umfangsnut, welche sich über mehrere Gewindegänge des Gewindes des Gewindebolzens (6) erstreckt, zur Aufnahme eines an dem Schlitten (7) zu befestigenden Drahtes (17) ausgebildet ist.

7. Instrument (0) zum Entfernen frakturierter Wurzelkanalinstrumente nach einem der vorherigen Ansprüche, **dadurch gekennzeichnet, dass** das vordere Ende des Instrumentengehäuses (1) außenseitig als Instrumentenspitze (3) derart ausgebildet ist, dass ein Ansatz in Form einer Kanüle (18) auf die Instrumentenspitze (3) gesteckt und daran klemmend fixiert werden kann, wozu die Instrumentenspitze (3) außenseitig eine entsprechende Konizität aufweist, wobei in der Instrumentenspitze (3) eine zur Vorderseite des Instrumentengehäuses (1) offene Bohrung (12) zur Durchführung eines Drahtes (17) ausgebildet ist.

8. Instrument (0) zum Entfernen frakturierter Wurzelkanalinstrumente nach Anspruch 7, **dadurch gekennzeichnet, dass** die Instrumentenspitze (3) mit einem radial nach außen vorstehenden, axial verlaufenden Steg versehen ist, so dass eine mit einer korrespondierenden Nut versehene Kanüle (18) an der Instrumentenspitze (3) in Umfangsrichtung positionierbar ist.

9. Instrument (0) zum Entfernen frakturierter Wurzelkanalinstrumente nach einem der vorherigen Ansprüche, **dadurch gekennzeichnet, dass** die Gewindestange (4) drehfest mit dem Schlitten (7) verbunden ist und axial in das Instrumentengehäuse (1) von dessen Rückseite her eingreift, und dass auf ein Außengewinde der Gewindestange (4) ein Stellrad (2) geschraubt ist, das an dem Instrumentengehäuse (1) axial fest gehalten ist, so dass eine Drehung des Stellrades (2) in eine axiale Bewegung der Gewindestange (4) und damit des Schlittens (7) umgesetzt wird, wobei insbesondere an der Rückseite des Instrumentengehäuses (1) eine Halterung angebracht, insbesondere festgeschraubt ist, die von der Gewindestange (4) axial durchgriffen wird und in welcher das Stellrad (2) axialfest positioniert ist.

10. Instrument (0) zum Entfernen frakturierter Wurzelkanalinstrumente nach Anspruch 10, **dadurch gekennzeichnet, dass** das Stellrad (2) an der Halterung durch ein Gleit- oder Wälzlager axial abgestützt ist.

11. Instrument (0) zum Entfernen frakturierter Wurzelkanalinstrumente nach einem der Ansprüche 1 bis 8, **dadurch gekennzeichnet, dass** die Gewindestange (4) an dem Schlitten (7) axialfest, aber um ihre Achse drehbar gehalten ist, und insbesondere axial in das Instrumentengehäuse (1) von dessen Rückseite her eingreift, und dass ein Außengewinde der Gewindestange (4) mit einem korrespondierenden Gegengewinde des Instrumentengehäuses (1) oder eines daran fixierten Bauteils in Eingriff steht, so dass eine Drehung der Gewindestange (4) in eine axiale translatorische Bewegung des Schlittens (7) umgesetzt wird, wobei insbesondere an dem freien Ende der Gewindestange (4) ein Betätigungsrad vorgesehen ist.

12. Instrument (0) zum Entfernen frakturierter Wurzelkanalinstrumente nach einem der vorherigen Ansprüche, **dadurch gekennzeichnet, dass** die Gewindestange (4) mit einem Feingewinde einer Steigung von 0,2 bis 1,2 mm, insbesondere von 0,4 bis 1 mm versehen ist.

13. Instrument (0) zum Entfernen frakturierter Wurzelkanalinstrumente nach einem der vorherigen Ansprüche, **dadurch gekennzeichnet, dass** Mittel vorgesehen sind, um eine auf den Schlitten (7) wirkende Zugkraft zu erfassen.

## Claims

1. Instrument (0) for removing fractured root canal instruments, comprising an instrument housing (1) formed hollow at least at its front end portion, a slide (7) which is non-rotatably held on the instrument housing (1) but guided for translational movement in an axial direction, a threaded rod (4) which is fixed to the slide (7) and is engaged with a counter thread of the instrument housing (1) or a counter member held on the instrument housing (1), so that a relative rotational movement between the threaded rod (4) on the one hand and the instrument housing (1) and/or the counter member on the other hand results in an axial displacement of the slide (7), and fastening means for fastening a wire (17) to the slide (7), wherein the hollow instrument housing (1) is open towards its front side, so that a wire (17) can be guided through the open front side into the instrument housing (1) and therein to the fastening means.

2. Instrument (0) for removing fractured root canal instruments according to claim 1, **wherein** the instrument housing (1) has a windowing (9) laterally so that a wire (17) inserted into the instrument housing (1) through the open front side thereof can be guided outwardly through the windowing (9) again and brought into engagement with the fastening means.

3. Instrument (0) for removing fractured root canal instruments according to claim 1 or 2 **wherein** the instrument housing (1) is tubular and the slide (7) is non-rotatably held in the instrument housing (1) but is guided for translational movement in the axial direction.

4. Instrument (0) for removing fractured root canal instruments according to claims 2 and 3, **wherein** the fastening means are connected to the slide (7) through the windowing (9) of the instrument housing (1) and project from the instrument housing (1) so that they can be actuated from the outside of the instrument housing (1).

5. Instrument (0) for removing fractured root canal instruments according to claim 4, **wherein** the fastening means comprise a threaded bolt, which is inserted into the slide (7) through the windowing (9) and is fixed, in particular screwed tight, therein, and a locking nut (6), which is screwed onto the end of the threaded bolt projecting from the slide (7), the arrangement being such that a wire (17) can be clamped between the locking nut (6) and the slide (7) to fix it to the slide (7).

6. Instrument (0) for removing fractured root canal instruments according to claim 5, **wherein** an axial through-hole (12) is formed in the threaded bolt through which a wire (17) can be passed, or **in that** an annular circumferential groove extending over several turns of the thread of the threaded bolt is formed in the circumferential surface of the threaded bolt for receiving a wire (17) to be fixed to the slide (7).

7. Instrument (0) for removing fractured root canal instruments according to any preceding claim , **wherein** the front end of the instrument housing (1) is designed on the outside as an instrument tip (3) in such a way that an attachment in the form of a cannula (18) can be plugged onto the instrument tip (3) and fixed thereto in a clamping manner, for which purpose the instrument tip (3) has a corresponding conicity on the outside, wherein a bore (12) open towards the front of the instrument housing (1) is formed in the instrument tip (3) for the passage of a wire (17).

8. Instrument (0) for removing fractured root canal instruments according to claim 7, **wherein** the instrument tip (3) is provided with a radially outwardly projecting, axially extending web so that a cannula (18) provided with a corresponding groove can be positioned on the instrument tip (3) in the circumferential direction.

9. Instrument (0) for removing fractured root canal instruments according to any preceding claim, **wherein** the threaded rod (4) is connected to the slide (7) in a rotationally fixed manner and engages axially into the instrument housing (1) from the rear side thereof, and **in that** an adjusting wheel (2) is screwed onto an external thread of the threaded rod (4), said adjusting wheel (2) being held axially fixed to the instrument housing (1) so that a rotation of the adjusting wheel (2) is converted into an axial movement of the threaded rod (4) and thus of the slide (7),
in particular, **wherein** a holder is attached, in particular screwed tight, to the rear side of the instrument housing (1), through which holder the threaded rod (4) passes axially and in which holder the adjusting wheel (2) is positioned axially fixed.

10. Instrument (0) for removing fractured root canal instruments according to claim 9, **wherein** the adjusting wheel (2) is axially supported on the holder by a sliding or roller bearing.

11. Instrument (0) for removing fractured root canal instruments according to any of the claims 1 to 18, **wherein** the threaded rod (4) is held axially fixed to the slide (7) but rotatable about its axis, and in particular engages axially into the instrument housing (1) from the rear side thereof, and **in that** an external thread of the threaded rod (4) is in engagement with a corresponding counter thread of the instrument housing (1) or of a component fixed thereto, so that a rotation of the threaded rod (4) is converted into an axial translational movement of the slide (7), an actuating wheel in particular being provided at the free end of the threaded rod (4).

12. Instrument (0) for removing fractured root canal instruments according to claim 1, **wherein** the threaded rod (4) is provided with a fine thread having a pitch of 0.2 to 1.2 mm, in particular of 0.4 to 1 mm.

13. Instrument (0) for removing fractured root canal instruments according to any preceding claim, **wherein** means are provided for detecting a tensile force acting on the slide (7).

## Revendications

1. Instrument (0) pour retirer les instruments fracturés du canal radiculaire, comprenant un boîtier d'instrument (1) formé creux au moins à sa partie frontale, une glissière (7) qui est maintenue non rotative sur le boîtier d'instrument (1) mais guidée pour un mouvement de translation dans une direction axiale, une tige filetée (4) qui est fixée à la glissière (7) et est engagée avec un contre-filet du boîtier d'instrument (1) ou un contre-élément maintenu sur le boîtier d'instrument (1), de sorte qu'un mouvement de rotation relatif entre la tige filetée (4) d'une part et le boîtier de l'instrument (1) et/ou le contre-élément d'autre part entraîne un déplacement axial de la glissière (7), et des moyens de fixation pour fixer un fil (17) à la glissière (7), le boîtier creux de l'instrument (1) étant ouvert sur sa face avant, de sorte qu'un fil (17) puisse être guidé à travers la face avant ouverte dans le boîtier de l'instrument (1) et à l'intérieur de celui-ci jusqu'aux moyens de fixation.

2. Instrument (0) pour retirer les instruments fracturés du canal radiculaire selon la revendication 1, **caractérisé en ce que** le boîtier de l'instrument (1) comporte une fenêtre (9) latérale de sorte qu'un fil (17) inséré dans le boîtier de l'instrument (1) par sa face avant ouverte peut être guidé vers l'extérieur à travers la fenêtre (9) et mis en prise avec les moyens de fixation.

3. Instrument (0) pour retirer les instruments fracturés du canal radiculaire selon la revendication 1 ou 2, **caractérisé en ce que** le boîtier de l'instrument (1) est tubulaire et la glissière (7) est maintenue de manière non rotative dans le boîtier de l'instrument (1) mais est guidée pour un mouvement de translation dans la direction axiale.

4. Instrument (0) pour retirer les instruments fracturés du canal radiculaire selon les revendications 2 et 3, **caractérisé en ce que** les moyens de fixation sont reliés à la glissière (7) à travers la fenêtre (9) du boîtier de l'instrument (1) et font saillie par rapport au boîtier de l'instrument (1) de manière à pouvoir être actionnés depuis l'extérieur du boîtier de l'instrument (1).

5. Instrument (0) pour l'extraction d'instruments canalaires fracturés selon la revendication 4, **caractérisé en ce que** les moyens de fixation comprennent un boulon fileté, qui est inséré dans la glissière (7) à travers la fenêtre (9) et y est fixé, en particulier vissé, et un écrou de blocage (6), qui est vissé sur l'extrémité du boulon fileté faisant saillie de la glissière (7), la disposition étant telle qu'un fil (17) peut être serré entre l'écrou de blocage (6) et la glissière (7) pour le fixer à la glissière (7).

6. Instrument (0) pour retirer les instruments fracturés du canal radiculaire selon la revendication 5, **caractérisé en ce** q**ue un** trou axial traversant (12) est formé dans le boulon fileté à travers lequel un fil (17) peut être passé, ou **enceque** une rainure circonférentielle annulaire s'étendant sur plusieurs tours du filetage du boulon fileté est formée dans la surface circonférentielle du boulon fileté pour recevoir un fil (17) à fixer à la glissière (7).

7. Instrument (0) pour l'extraction d'instruments canalaires fracturés selon une des revendications précédentes, **caractérisé en ce que l**'extrémité avant du boîtier de l'instrument (1) est conçue à l'extérieur comme une pointe de l'instrument (3) de manière à ce qu'un accessoire sous forme de canule (18) puisse être enfiché sur la pointe de l'instrument (3) et fixé à celle-ci de manière à la serrer, à cet effet, la pointe de l'instrument (3) présente une conicité correspondante à l'extérieur, dans laquelle un alésage (12) ouvert vers l'avant du boîtier de l'instrument (1) est formé dans la pointe de l'instrument (3) pour le passage d'un fil (17).

8. Instrument (0) pour retirer les instruments fracturés du canal radiculaire selon la revendication 7, **caractérisé en ce que** la pointe de l'instrument (3) est pourvue d'une bande s'étendant axialement et faisant saillie radialement vers l'extérieur, de sorte qu'une canule (18) pourvue d'une rainure correspondante peut être positionnée sur la pointe de l'instrument (3) dans la direction circonférentielle.

9. Instrument (0) pour retirer les instruments fracturés du canal radiculaire selon une des revendications précédentes, **caractérisé en ce que** la tige filetée (4) est reliée à la glissière (7) d'une manière fixe en rotation et s'engage axialement dans le boîtier de l'instrument (1) à partir de la face arrière de celui-ci, et **en ce qu**'une roue de réglage (2) est vissée sur un filetage externe de la tige filetée (4), ladite roue de réglage (2) étant maintenue axialement fixée au boîtier de l'instrument (1) de sorte qu'une rotation de la roue de réglage (2) est convertie en un mouvement axial de la tige filetée (4) et donc de la glissière (7),
en particulier, dans **lequel** un support est fixé, en particulier vissé, à la face arrière du boîtier de l'instrument (1), à travers lequel passe axialement la tige filetée (4) et dans lequel la roue de réglage (2) est positionnée de manière à être fixée axialement.

10. Instrument (0) pour retirer les instruments fracturés du canal radiculaire selon la revendication 9, **caractérisé en ce que la** roue de réglage (2) est supportée axialement sur le support par un palier à glissement ou à rouleaux.

11. Instrument (0) pour retirer les instruments fracturés du canal radiculaire selon l'une des revendications 1 à 8, **caractérisé en ce que** la tige filetée (4) est maintenue axialement fixée à la glissière (7) mais rotative autour de son axe, et en particulier s'engage axialement dans le boîtier de l'instrument (1) à partir de la face arrière de ce dernier, et **en ce qu**'un filetage extérieur de la tige filetée (4) est en prise avec un contre-filet correspondant du boîtier de l'instrument (1) ou d'un composant qui y est fixé, de sorte qu'une rotation de la tige filetée (4) est convertie en un mouvement de translation axial de la glissière (7), une roue d'actionnement étant notamment prévue à l'extrémité libre de la tige filetée (4).

12. Instrument (0) pour retirer les instruments fracturés du canal radiculaire selon une des revendications précédentes, **caractérisé en ce que** la tige filetée (4) est pourvue d'un filetage fin ayant un pas de 0,2 à 1,2 mm, en particulier de 0,4 à 1 mm.

13. Instrument (0) pour retirer les instruments fracturés du canal radiculaire selon une des revendications précédentes, **caractérisé en ce que** des moyens sont prévus pour détecter une force de traction agissant sur la glissière (7).
